# EUROPÄISCHE PATENTSCHRIFT

(11) **EP 1 998 120 B1**
(45) Veröffentlichungstag und Bekanntmachung des Hinweises auf die Patenterteilung: **22.08.2012**
(21) Anmeldenummer: 08009527.6
(22) Anmeldetag: 24.05.2008
(51) Int. Cl.: F24J 2/46, F16D 3/00, F16L 27/08

(54) **Sonnenkraftwerk mit Drehvorrichtung**
Solar power plant with rotation device
Centrale solaire dotée d'un dispositif de rotation

(30) Priorität: 30.05.2007 DE 102007025209
(43) Veröffentlichungstag der Anmeldung: 03.12.2008
(73) Patentinhaber: Mosmatic AG, 9126 Necker (CH); Senior Flexonics GmbH, 34121 Kassel (DE)
(72) Erfinder: Rieben, Karl, 9126 Necker (CH)
(74) Vertreter: Riebling, Peter

(56) Entgegenhaltungen:
- EP-A1- 0 377 140
- DE-A1-102007 048 745
- US-A- 4 078 549
- US-A- 4 484 568
- US-A- 4 856 494
- US-A- 4 934 324

## Beschreibung

Gegenstand der Erfindung ist ein Sonnenkraftwerk mit Drehvorrichtung nach dem Oberbegriff des Patentanspruches 1.

Ein solches Kraftwerk wird z.B. durch die Schrift US-A-4078549 offenbart.

Sonnenkraftwerke, insbesondere Parabolrinnenkraftwerke, werden weltweit eingesetzt.

Die hierbei verwendeten Parabolrinnenkollektoren bestehen aus gewölbten Spiegeln, die das Sonnenlicht auf ein in der Brennlinie verlaufendes Absorberrohr bündeln. Die Länge solcher Kollektoren liegt je nach Bautyp zwischen 20 und 150 Metern. In den Absorberrohren wird die konzentrierte Sonnenstrahlung in Wärme umgesetzt und an ein zirkulierendes Wärmeträgermedium abgegeben. Die Parabolrinnen werden
aus Kostengründen meist nur einachsig der Sonne nachgeführt. Sie sind deshalb in Nord-Süd-Richtung angeordnet und werden der Sonne im Tagesverlauf von Ost nach West nachgeführt.

Die Erfindung bezieht sich jedoch nicht nur auf ein Parabolrinnenkraftwerk, sondern auch auf eine Fresnel-Kollektoranlage.

Eine Weiterentwicklung der Parabolrinnen sind sogenannte Fresnel-Spiegel-Kollektoren. Bei ihnen wird das Sonnelicht über mehrere zu ebener Erde angeordnete parallele ungewölbte Spiegelstreifen auf ein Absorberrohr gebündelt. Die Streifen werden einachsig nachgeführt.

Ein zusätzlicher Sekundärspiegel hinter dem Rohr lenkt die Strahlung auf die Brennlinie. Dieses Konzept befindet sich derzeit in der praktischen Erprobungsphase.

Diese Bauweise verbindet die Funktionsprinzipien von Parabolrinnenkollektoren und Turmkraftwerken miteinander, wobei sowohl auf gewölbte Spiegel als auch auf mehrachsige Sonnenstandsnachführungen verzichtet wird und der modulare Aufbau erhalten bleibt. Von der Verwendung der einfacher herzustellenden ungewölbten Spiegelstreifen werden Kostenvorteile erwartet. Das Absorberrohr wird im Gegensatz zu den meisten Parabolrinnenkonstruktionen nicht bewegt. So können sehr lange Kollektoren gebaut werden, die durch fehlende Rohrbögen und flexible Verbindungen geringe Strömungswiderstände für das Wärmeträgermedium aufweisen. Dem stehen Verschattungsverluste zwischen den Spiegelstreifen gegenüber.

Bei dem Betrieb derartiger Sonnenkraftwerke besteht das Problem, dass man Kollektoren mit einer Länge zwischen 20 und 150 m hat und dass jede Kollektoranordnung von einem eigenen Parabolspiegel mit Sonnenlicht bestrahlt wird. Es wird also eine Vielzahl von Parabolspiegeln verwendet, die alle mit eigenen Drehantrieben versehen sind.

Problem ist nun, dass man die einzelnen Absorberrohre der einzelnen Anlagen, von denen jede mit einem Parabolspiegel arbeitet, miteinander über Schlauchverbindungen verbinden will. Bisher ist es lediglich bekannt, bei solchen Schlauchverbindungen sogenannte Gelenkverbindungen zu verwenden. Es handelt sich hierbei um starre Rohre, die über Kugelkopfverbindungen flüssigkeitsleitend miteinander verbunden sind.

Eine gelenkige Rohrverbindung ist deshalb erforderlich, weil die Parabolspiegel alle gemeinsam mit dem Sonnenlicht mitgeführt werden und dementsprechend gedreht werden. Es müssen daher die Rohrverbindungen zwischen den einzelnen Absorberrohren mitgedreht werden.

Mit den bekannten Kugeldrehverbindungen war dies nur ungenügend möglich, weil die Kugeldrehverbindungen sehr teuer sind, eine nur begrenzte Lebensdauer aufweisen und im Übrigen nur bis Nennweiten von maximal 50 mm gehen.

Problem bei der Anordnung ist nämlich, dass das in den Absorberrohren zirkulierende Wärmeträgeröl eine Temperatur von etwa 400° C und einen Druck von etwa 40 bar aufweist. Deshalb sind die zum Stand der Technik gehörenden Kugelgelenkdrehverbindungen nur schlecht einsetzbar und neigen nach längerer Lebensdauer zum Lecken. Das liegt unter Anderem auch daran, dass eine Drehung lediglich einmal pro Tag stattfindet und die in den Kugeldrehgelenken angeordneten Dichtungen deshalb zum Verspröden oder zum Festfressen neigen, was die Kugeldrehverbindung unbrauchbar macht.

Der Erfindung liegt deshalb die Aufgabe zugrunde, eine Verbindung zwischen mehreren Absorberrohren von Solarkraftwerken so weiterzubilden, dass sie bei Erreichen einer höheren Nennweite eine längere Lebensdauer bei geringeren Kosten aufweist.

Zur Lösung der gestellten Aufgabe ist die Erfindung dadurch gekennzeichnet, dass der Metallschlauch abdichtend durch eine Drehvorrichtung geführt ist, welche zwangsläufig von dem Drehantrieb des Parabolspiegels mit gedreht wird.

Mit der gegebenen technischen Lehre ergibt sich nun der wesentliche Vorteil, dass nun auf die Kugelkopfrohrverbindungen verzichtet werden kann und stattdessen flexible Schläuche verwendet werden, wobei als Material für diese Schläuche insbesondere Metallschläuche verwendet werden. Für derartige hohe Drucke und Temperaturen werden sogenannte Wellschläuche verwendet, welche flexibel sind und aus Edelstahl bestehen. Die Wahl des Materials der Schläuche ist nicht entscheidend. Entscheidend ist nur, dass diese Schläuche eine gewisse Biegbarkeit und Verdrehbarkeit aufweisen und dass die Schläuche im Bogen zu der Drehvorrichtung verlegt sind, um einen entsprechenden Längenausgleich zu gewährleisten. Es hat sich nämlich beim Betrieb derartiger Parabolrinnenkraftwerke herausgestellt, dass bei Kollektorlängen von z. B. 100 m das Absorberrohr ein Längenspiel von bis zu 1 m aufweist. Die genannten Schläuche nehmen derartige axiale Längenspiele ohne Weiteres auf und sind deshalb den eingangs genannten Kugelkopf-Rohrverbindungen weit überlegen.

Wichtig ist nun, dass diese Schläuche mit einer Drehvorrichtung verbunden ist und die Drehvorrichtung mit einem Mitnehmer drehfest mit Drehantrieb des jeweiligen Parabolspiegels verbunden ist, um zu gewährleisten, dass der von dem einen Absorberrohr in die Drehvorrichtung einlaufende Schlauch synchron mit dem aus der Drehvorrichtung auslaufenden anderen Schlauch, der in das benachbarte Absorberrohr einläuft, drehfest gekoppelt mitgenommen wird.

Damit wird also ein zwangsweiser Drehantrieb für die Schlauchverbindung zwischen benachbarten Absorberrohren vorgeschlagen, was bisher noch nicht bekannt war.

Wichtig ist, dass die Drehvorrichtung als solches die hohen Drücke und Temperaturen beherrscht, und zu diesem Zweck ist in der Drehvorrichtung eine Drehdurchführung vorgesehen, welche eine abdichtende Drehverbindung zwischen zwei zueinander einlaufenden Rohren bildet.

Es wird im Rahmen der vorliegenden Erfindung unabhängig von dem Erfindungsgedanken der Anordnung eine Drehvorrichtung gesonderter Schutz für die Art und Ausbildung der Drehdurchführung beansprucht.

Wichtig bei der genannten Drehdurchführung ist, dass ein Einlaufrohr und ein Auslaufrohr und zwischen den beiden Rohren ein mit dem Einlaufrohr gekuppelte Lagerbüchsen vorhanden sind und dass zwischen dem das Innenrohr ausbildende Auslaufrohr und das Außenrohr ausbildende Einlaufrohr ein mehrfach gestufte Dichtung mit einer entsprechenden Federvorspannung angeordnet ist.

In einer bevorzugten Ausgestaltung der Erfindung ist die Dichtung als geschichtete Dichtung ausgebildet, wobei nächst dem Einlaufrohr zunächst ein harter Dichtring angeordnet ist, dem unmittelbar ein weicher Dichtring folgt, auf den wiederum ein harter Dichtring geschichtet ist. Es handelt sich also um eine Dreifachschichtung von zwei harten Dichtringen mit einem dazwischen angeordneten weichen Dichtring.

Wichtig ist, dass alle drei Dichtringe aus einem Grafitmaterial bestehen, welches bekannterweise hohe Temperaturen und hohe Drucke aushält. Ein solches Grafitmaterial ist selbstschmierend und daher bedarf es keiner Schmierung im Bereich dieses Dichtungspaketes.

Wichtig ist nun, dass hinter dem dreifach geschichteten Dichtungspaket ein Zwischenring angeordnet ist, auf den wiederum ein Tellerfederpaket arbeitet, welches in axialer Richtung eine entsprechende Vorspannung auf den Zwischenring ausübt, der seinerseits diese Vorspannung auf die Dreifachschichtung des Dichtungspaketes weitergibt.

Damit wird ein außerordentlich hoher Dichtungsdruck erzeugt und die Dreifachschichtung des Dichtungspaketes kann somit sich geringfügig verformen und sich sowohl radial als auch axial bewegen, um sicher einerseits an dem Innenumfang des äußeren Gehäuserohres und andererseits an den Außenumfangs des inneren Gehäuserohres anlegen zu können.

Weiter ist wichtig, dass in axialer Entfernung von dem Dichtungspaket und dem zugeordneten Tellerfederpaket zwei im Abstand voneinander angeordnete Gleitlager angeordnet sind. Jedes Gleitlager besteht hierbei aus einer Sinterbronze, und zwar aus einem Ring, der sowohl axiale Bewegungen als auch radiale Bewegungen als Lager umsetzt.

Zwischen den beiden in axialem Abstand voneinander angeordneten Zylinderlagern ist hierbei ein Einstich angeordnet, der eine Fettkammer ausbildet, so dass geringfügige Fettmengen sowohl in der einen Richtung auf das eine Zylinderlager als auch in der anderen Richtung auf das andere Zylinderlager einwirken kann.

Damit wird erstmals eine absolut zuverlässige Drehdurchführung für hohe Temperaturen und hohe Drücke geschaffen, bei dem eine einwandfreie Abdichtung zwischen einem Einlaufrohr und einem Auslaufrohr gewährleistet ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die Darstellung der Rohrverbindung von zwei Absorberrohren eines Parabolrinnenkraftwerkes mit der erfindungsgemäßen Drehvorrichtung
- Figur 2:: schematisiert in Ansicht von vorne ein Parabolrinnenkraftwerk
- Figur 3:: die Drehvorrichtung nach der Erfindung bei ausgebauter Drehvorrichtung
- Figur 4:: die Drehvorrichtung nach Figur 3 mit eingebauter Drehdurchführung
- Figur 5:: die Drehdurchführung nach Figur 4 im Schnitt
- Figur 6:: schematisiert die Drehvorrichtung nach Figur 5 im teilweise aufgeschnittenen Zustand

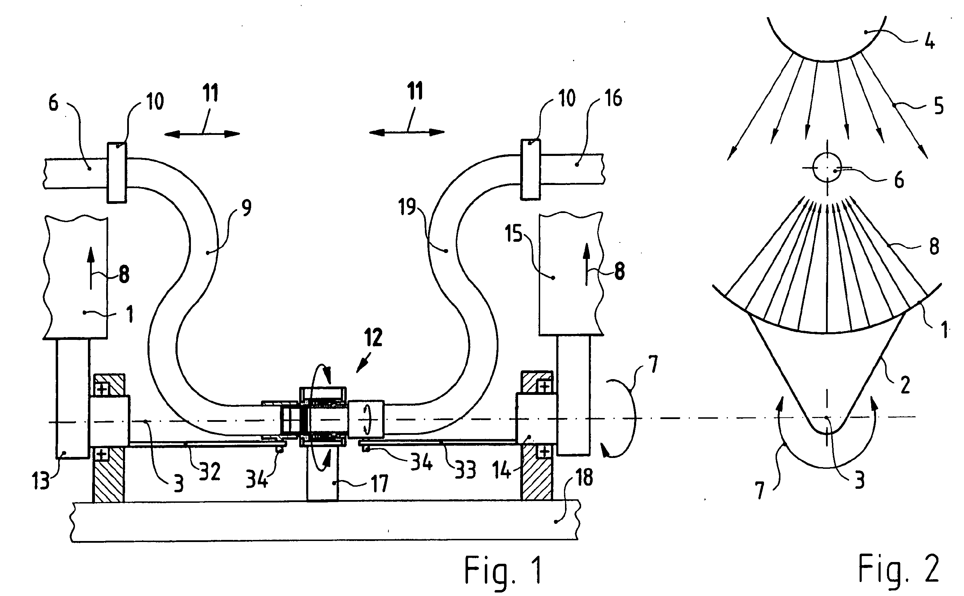

In Figur 1 ist allgemein gezeigt, dass zwei Parabolspiegel 1, 15 jeweils ein Absorberrohr 6, 16 aufheizen. Anhand der Figur 2 ist erkennbar, dass jeder Parabolspiegel 1, 15 einen Brennmittelpunkt bildet, um dessen Bereich das jeweilige Absorberrohr 6, 16 angeordnet ist. Hierbei wirkt die Sonne 4 in Pfeilrichtung 5 auf den Parabolspiegel 1, 15, der seinerseits das Sonnenlicht in Pfeilrichtung 8 auf seinen Brennpunkt und auf das dort angeordnete Absorberrohr 6, 16 einstrahlt.

Gemäß Figur 2 ist jeder Parabolspiegel 1, 15 in einer Drehachse 3 in den Pfeilrichtungen 7 drehbar gelagert, wobei der Parabolspiegel selbst in einer Halterung 2 gehalten ist.

Es sind also genau identische Parabolspiegel 1, 15 nach Figur 1 vorhanden, während Absorberrohre 6, 16 durch die erfindungsgemäße Schlauchverbindung und die dazwischen angeordnete Drehvorrichtung 12 verbunden werden müssen.

Zur flüssigkeitsleitenden Verbindung werden bevorzugt die Metallschläuche 9, 19 verwendet, wobei wichtig ist, dass jeder Metallschlauch 9, 19 ein axiales Längenspiel in den Pfeilrichtungen 11 von mindestens 1 m aushalten muss. Sie sind deshalb im Bogen verlegt, um ein gewisses Ausgleichsspiel zu gewährleisten.

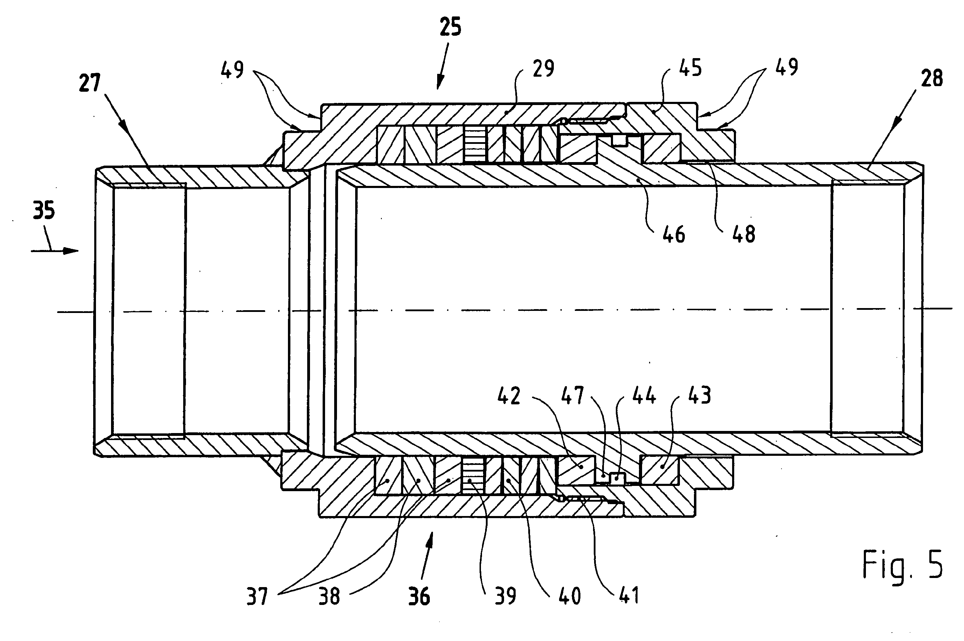

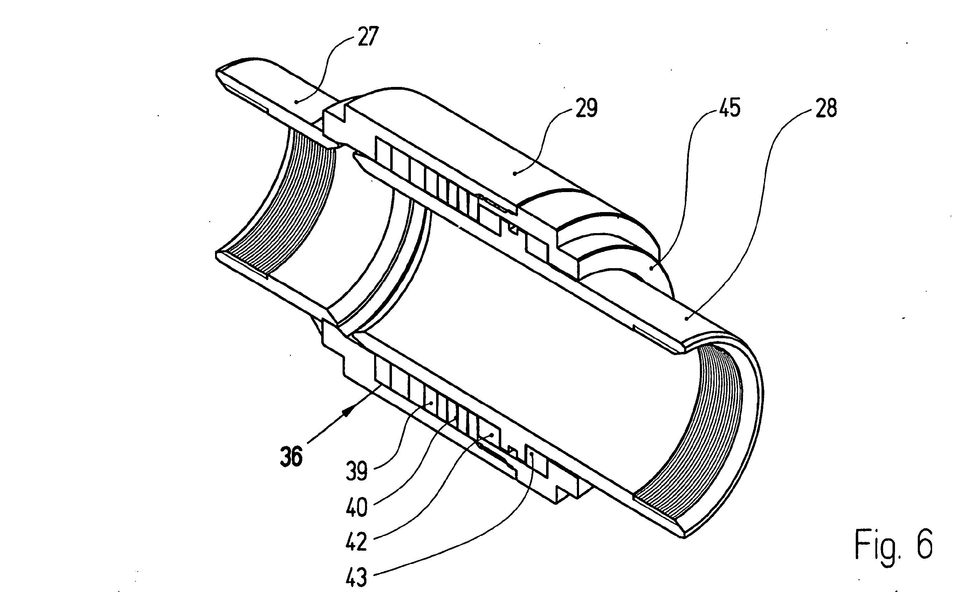

Die freien Enden der beiden Metallschläuche 9, 19 sind in die Drehvorrichtung 12 eingeführt und sind dort flüssigkeitsleitend an die anhand der Figur 5 und 6 näher zu beschreibende Drehdurchführung 25 angeschlossen.

Die Schläuche sind im Übrigen im Bereich der Parabolspiegel (1, 15) mit Flanschen 10 mit dem jeweiligen Absorberrohr 6, 16 flüssigkeitsleitend verbunden.

Wichtig ist nun, dass die Drehvorrichtung 12 gemäß Figur 1 und den Figuren 3 und 4 im Wesentlichen aus einem Ständer 17 besteht, der auf einer Aufstellfläche aufgestellt ist und auf dem Ständer 17 sind zwei im Abstand voneinander angeordnete Lagerschalen 20, 22 angeordnet, welche durch entsprechende Distanzbolzen 26 auf Abstand gehalten sind.

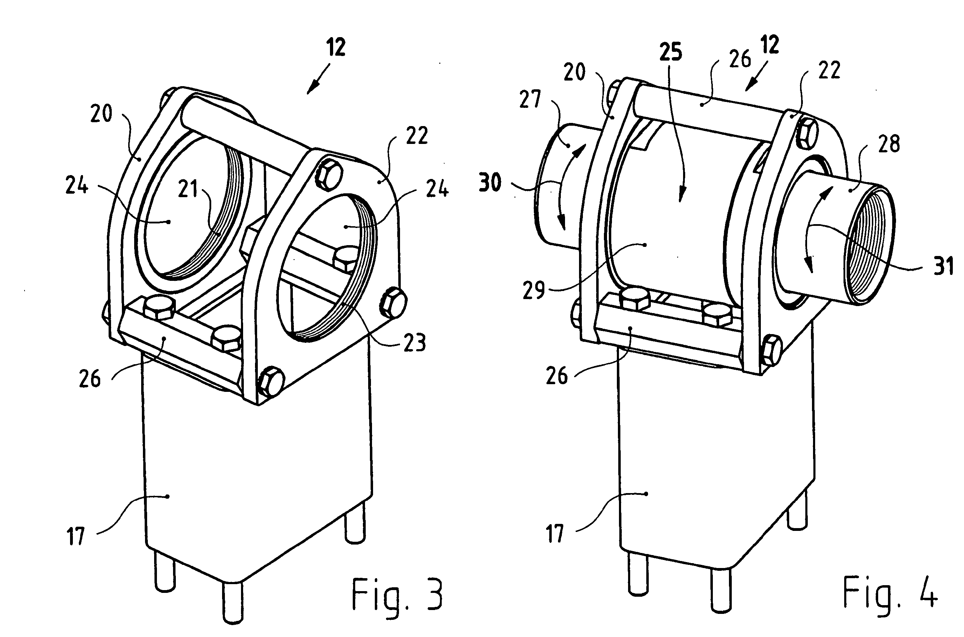

Im Innenraum jeder Lagerschale 20, 22 ist ein Lagerring 21, 23 angeordnet. Damit ist die in Figur 4 dargestellte Drehdurchführung 25 drehfest von den Lagerringen 21, 23 aufgenommen, die ihrerseits in den Lagerschalen 20, 22 drehbar sind.

Damit ist die gesamte Drehdurchführung 25 in den Pfeilrichtungen 31 drehbar in der Drehvorrichtung 12 aufgenommen.

Grund für diese Drehlagerung ist, dass bei der Verdrehung jedes Parabolspiegels 1, 15 auch die Drehvorrichtung 12 zwangsläufig mitgenommen werden muss. Es muss demzufolge die Drehdurchführung 25 zwangsläufig die Drehung in den Pfeilrichtungen 7 mitmachen. Zu diesem Zweck ist mit jedem Drehlager 13, 14 jeden Parabolspiegels 1, 15 ein Mitnehmer 33, 32 gekoppelt, der an einer Nase 34 ansetzt, welche Nase 34 drehfest mit der Drehdurchführung 25 verbunden ist. Die eine Nase 34 ist demzufolge mit dem Einlaufrohr 27 (siehe Figur 4) der Drehdurchführung 25 und die andere Nase ist drehfest mit dem Auslaufrohr 28 der Drehdurchführung 25 verbunden.

Grund hierfür ist, dass nicht immer für eine synchrone Verdrehung der beiden Parabolspiegel 1, 15 gesorgt werden kann. Es ist besonders bei Reparaturmaßnahmen gegeben. Bei solchen Reparaturmaßnahmen ist deshalb wichtig, dass das Einlaufrohr 27 unabhängig von dem Auslaufrohr 28 gedreht werden kann und deshalb muss die Drehdurchführung 25 in sich verdrehbar sein.

Im Normalbetrieb, wenn die Parabolspiegel 1, 15 synchron miteinander verdreht werden, ist es nicht notwendig, dass das Einlaufrohr 27 und das Auslaufrohr 28 der Drehdurchführung getrennt voneinander verdrehbar sind; diese bleiben dann im Wesentlichen in der Drehverbindung fest und der äußere Teil der Drehvorrichtung 12 mit den Lagerschalen 20 und 22 sowie mit den dort angeordneten Lagerringen 21 und 23 sorgt insgesamt für eine Verdrehung der Drehdurchführung 25 in der Pfeilrichtung 7.

Es wird hierbei davon ausgegangen, dass sowohl die Ständer für die Parabolspiegel 1, 15 als auch der Ständer 17 auf eine Aufstellfläche 18 ortsfest montiert sind.

Es versteht sich im Übrigen von selbst, dass die Drehlager 13, 14 der Parabolspiegel 1, 15 in beliebiger Weise ausgebildet sein können. Es ist kein Drehantrieb näher dargestellt.

Es wird noch angefügt, dass die in Figur 4 dargestellte Drehdurchführung 25 durch die Ausnehmung 24 der Lagerschalen 20, 22 hindurchgreift und dort drehfest mit den jeweiligen Lagerringen 21, 23 verbunden ist.

Anhand der Figuren 5 und 6 wird nun der erfindungsgemäße Aufbau der Drehdurchführung 25 näher erläutert.

Wichtig ist, dass die beiden über eine Drehkupplung miteinander abdichtend verbundenen Einlauf- und Auslaufrohre 27, 28 eine sehr große Nennweite der Drehdurchführung erlauben, die im Bereich von etwa 60 bis 100 mm liegt. Dies ist ein wesentlicher Vorteil gegenüber den bekannten Rohr-Gelenkkopf-Verbindungen.

Die Metallschläuche 9, 19 werden an den jeweiligen Einlauf- und Auslaufflansch des Einlauf- und Auslaufrohres 27, 28 angeschweißt.

Der Einlaufbereich des Einlaufrohres 27 erweitert sich radial auswärts in Form eines Gehäuserohres 29, welches den Außenbereich der Drehdurchführung 25 bildet. Andererseits geht das Auslaufrohr 28 gerade und zylindrisch durch und erstreckt sich so in den Innenbereich des Gehäuserohres 29 hinein. Damit wird der Vorteil erzielt, dass aus kleinem Einbauraum ein guter Gehäusedurchfluss gegeben ist, der durch weitere Einbauten nicht gestört ist.

Wichtig ist, dass im Zwischenraum zwischen dem äußeren Gehäuserohr 29 und dem Innenrohr 46 des Auslaufrohres 28 das Dichtungspaket 36 angeordnet ist.

Es wird bevorzugt, wenn dieses Dichtungspaket aus ein, zwei oder mehreren Dichtungsringen 37, 38, 39 besteht. Im bevorzugten Ausführungsbeispiel sind insgesamt drei Dichtungsringe 37, 38, 39 vorhanden, wobei der erste und der dritte Dichtungsring 37, 39 aus einem harten Grafitmaterial bestehen, während der mittlere Dichtring 38 aus einem weichen Grafitmaterial besteht.

An den hinteren Dichtring 37 schließt sich ein Zwischenring 39 an, auf den die axiale Verschiebungskraft eines Tellerfederpaketes 40 einwirkt. Dieses Tellerfederpaket besteht aus insgesamt vier zueinander geschichteten Tellerfedern, die deshalb eine sehr hohe Druckkraft über den Zwischenring auf das Dichtungspaket 36 ausüben.

Das Tellerfederpaket 40 stützt sich an einem Anschlag einer Lagerbüchse 45 an, die mit Hilfe eines Gewindes 41 auf den Innenumfang des Außenrohres 29 aufgeschraubt ist.

Die Lagerbüchse 45 nimmt hierbei zwei im Abstand voneinander angeordnete Gleitlager 42, 43 auf, zwischen denen ein Einstich 44 vorhanden ist. Der Einstich 44 ist bevorzugt als Fettkammer ausgebildet, so dass das Fett sowohl in das eine Gleitlager 42 als auch in das andere Gleitlager 43 eingespeist werden kann. Die Gleitlager dienen sowohl zur radialen als auch zur axialen Drehlagerung zwischen dem Einlaufrohr 27 und dem Auslaufrohr 28. Sie können deshalb hohe Verkantungskräfte übertragen, haben eine hohe Lebensdauer und sind in besonderer Weise durch die vorgenannte Dichtungsanordnung mit dem Dichtungspaket 36 abgedichtet.

Im hinteren Bereich bildet die Lagerbüchse 45 einen Ansatz, der in Richtung auf das Auslaufrohr 28 einen Spielbereich 48 ausbildet.
Auf diesen Ansatz sind Aufnahmeanschläge 49 ausgebildet, auf denen die Lagerringe 21, 23 drehbar gelagert sind.

Zwar wurde im vorigen Beschreibungsteil davon ausgegangen, dass die Lagerringe drehfest mit der Lagerbüchse 45 verbunden sind. Dies ist jedoch nur eine erste Ausführungsform, während die hier beschriebene zweite Ausführungsform sich darauf bezieht, dass die Lagerringe 21, 23 drehbar auf den Aufnahmeanschlägen gelagert sind.

Im erstgenannten Fall würden die Lagerringe 21, 23 in den Lagerschalen 20, 22 verdrehbar sein, während im zweitgenannten Fall die Lagerringe 21, 23 fest in den Lagerschalen 20, 22 aufgenommen sind und deshalb ein Drehlager an den Aufnahmeanschlägen 49 bilden.

Bei den endseitig an einer Parabolrinnenanlage angesetzten Schläuchen ist es nicht erforderlich, eine Drehlagerung der Drehdurchführung 25 in der Drehvorrichtung 12 vorzusehen. Deshalb sieht die vorliegende Erfindung auch vor, dass die Drehlagerung mit den Lagerringen 21, 23 in den Lagerschalen 20, 22 entfallen kann und dass deshalb nur die Drehdurchführung 25 selbst verdrehbar ist, wie dies mit den Pfeilrichtungen 31, 30 in Figur 4 dargestellt ist.

Bei der Drehdurchführung 25 nach Figur 5 ist im Übrigen noch wichtig, dass zwischen den beiden Gleitlagern 42, 43 ein sich radial nach außen gerichteter Flanschring 47 vorgesehen ist, in dessen Bereich die radial auswärts gerichtete und offene Fettkammer mit dem Einstich 44 ausgebildet ist.

Bei der Drehdurchführung nach Figur 5 wird vorausgesetzt, dass heißes Druckmedium beispielsweise in Pfeilrichtung 35 in das dort gezeigte Einlaufrohr 27 einläuft.

Wichtig bei der vorliegenden Erfindung ist also, dass im Bereich einer Drehvorrichtung 12 eine gegebenenfalls dort drehbar gelagerte Drehdurchführung 25 für sehr hohe Drücke und hohe Temperaturen einer Schlauchverbindung angeordnet ist.

### Zeichnungslegende

- 1: Parabolspiegel
- 2: Halterung
- 3: Drehachse
- 4: Sonne
- 5: Pfeilrichtung
- 6: Absorberrohr
- 7: Pfeilrichtung
- 8: Pfeilrichtung
- 9: Metallschlauch
- 10: Flansch
- 11: Pfeilrichtung (axiale Ausdehnung)
- 12: Drehvorrichtung
- 13: Drehlager
- 14: Drehlager
- 15: Parabolspiegel
- 16: Absorberrohr
- 17: Ständer
- 18: Aufstellfläche
- 19: Metallschlauch
- 20: Lagerschale
- 21: Lagerring
- 22: Lagerschale
- 23: Lagerring
- 24: Ausnehmung
- 25: Drehdurchführung
- 26: Distanzbolzen
- 27: Einlaufrohr
- 28: Auslaufrohr
- 29: Gehäuserohr
- 30: Pfeilrichtung
- 31: Pfeilrichtung
- 32: Mitnehmer
- 33: Mitnehmer
- 34: Nase
- 35: Pfeilrichtung
- 36: Dichtungspaket
- 37: Dichtring (hart)
- 38: Dichtring (weich)
- 39: Zwischenring
- 40: Tellerfederpaket
- 41: Gewinde
- 42: Gleitlager (radial und axial)
- 43: Gleitlager (radial und axial)
- 44: Einstich (Fettkammer)
- 45: Lagerbüchse
- 46: Innenrohr
- 47: Flanschring
- 48: Spielbereich
- 49: Aufnahmeanschläge (Lagerring 21, 23)

## Patentansprüche

1. Sonnenkraftwerk mit Drehvorrichtung, welches Kollektoren aufweist, die vorzugsweise mit einachsig geführten Parabolrinnen ausgebildet sind, wobei die Parabolrinnen gewölbte Parabolspiege (1,15) aufweisen, welche das Sonnenlicht (5) auf ein oder mehrere in der Brennlinie verlaufende Absorberrohre (6,16) bündeln, die miteinander verbunden sind und die konzentrierte Sonnenstrahlung (8) in Wärme umwandeln und an ein zirkulierendes Wärmeträgermedium abgeben, wobei als zwangsweiser Drehantrieb für eine Schlauchverbindung zwischen benachbarten Absorberrohren jedes Absorberrohr (6, 16) mit einem flexiblen Metallschlauch (9, 19) verbunden ist, **dadurch gekennzeichnet, dass** dieser Metallschlauch abdichtend durch eine Drehvorrichtung (12) geführt ist, die zwangsläufig von einem Drehantrieb des Parabolspiegels (1, 15) drehangetrieben ist.

2. Sonnenkraftwerk nach Anspruch 1, **dadurch gekennzeichnet, dass** in der Drehvorrichtung (12) eine Drehdurchführung (25) vorgesehen, welche eine abdichtende Drehverbindung zwischen zwei zueinander einlaufenden Absorberrohren (6, 16) bildet.

3. Sonnenkraftwerk nach Anspruch 2, **dadurch gekennzeichnet, dass** zwischen einem Einlaufrohr (27) und einem Auslaufrohr (28) eine mit dem Einlaufrohr gekuppelte Lagerbüchse (45) vorhanden ist und dass zwischen dem das Innenrohr ausbildende Auslaufrohr und das Außenrohr ausbildende Einlaufrohr ein mehrfach gestufte Dichtung (37-39) mit Federvorspannung (40) angeordnet ist.

4. Sonnenkraftwerk nach einem der vorhergehenden Ansprüche 1 bis 3, **dadurch gekennzeichnet, dass** das freie Ende des Metallschlauchs (9, 19) in die Drehvorrichtung (12) eingeführt und flüssigkeitsleitend an eine in sich verdrehbar oder nicht in sich verdrehbar ausgebildete Drehdurchführung (25) angeschlossen ist.

5. Sonnenkraftwerk nach einem der vorhergehenden Ansprüche 2 bis 4, **dadurch gekennzeichnet, dass** die Drehvorrichtung (12) einen Ständer (17) aufweist, an welchem zwei beabstandete Lagerschalen (20,22) angeordnet sind, die mittels Distanzbolzen (26) auf Abstand gehalten sind, wobei jede Lagerschale (20, 22) einen drehbaren Lagerring (21, 23) aufweist, und die Drehdurchführung (25) drehbar in der Drehvorrichtung (12) ausgebildet ist.

6. Sonnenkraftwerk nach einem der vorhergehenden Ansprüche 2 bis 5, **dadurch gekennzeichnet, dass** der Parabolspiegel (1, 15) mit einem Mitnehmer (32, 33) gekoppelt ist, welcher an einer mit einem Einlauf- und/oder Auslaufrohr (27, 28) der Drehdurchführung (25) drehfest verbundenen Nase (34) ansetzt und die Drehvorrichtung (12) bei einer Verdrehung des Parabolspiegels (1, 15) zwangsläufig mitnimmt.

7. Sonnenkraftwerk nach einem der vorhergehenden Ansprüche 1 bis 6, **dadurch gekennzeichnet, dass** das Einlauf- und Auslaufrohr (27, 28) mittels einer Drehkupplung abdichtend miteinander verbunden sind und eine Nennweite im Bereich von 60 bis 100 mm aufweisen und der Metallschlauch (9, 19) an den jeweiligen Einlauf- und Auslaufflansch des Einlauf- und Auslaufrohres (27, 28) angeschweißt ist.

8. Sonnenkraftwerk nach einem der vorhergehenden Ansprüche 2 bis 6, **dadurch gekennzeichnet, dass** das Einlaufrohr (27) sich radial auswärts in Form eines Gehäuserohres (29) erweitert, welches den Außenbereich der Drehdurchführung (25) bildet, wobei sich das Auslaufrohr (28) gerade und zylindrisch in den Innenbereich des Gehäuserohres (29) erstreckt und ein Innenrohr (46) ausbildet.

9. Sonnenkraftwerk nach Anspruch 8, **dadurch gekennzeichnet, dass** die Drehdurchführung (25) zwischen dem äußeren Gehäuserohr (29) und dem Innenrohr (46) des Auslaufrohres (28) ein Dichtungspaket (36) aufweist, das mindestens paarweise vorhandene Dichtungsringe (37, 38, 39) enthält, die vorzugsweise aus einem Grafitmaterial bestehen und in der Paarung voneinander unterschiedliche Härten aufweisen.

10. Sonnenkraftwerk nach Anspruch 9, **dadurch gekennzeichnet, dass** die Dichtung als geschichtete Dichtung ausgebildet ist und dass eine Dreifachschichtung von zwei harten Dichtringen mit einem dazwischen angeordneten weichen Dichtring vorhanden ist.

11. Sonnenkraftwerk nach einem der vorhergehenden Ansprüche 9 bis 10, **dadurch gekennzeichnet, dass** sich an den hinteren Dichtring (37) ein Zwischenring (39) anschließt, welcher axiale Verschiebungskräfte eines sich anschließenden Tellerfederpaketes (40) aufnimmt.

12. Sonnenkraftwerk nach Anspruch 11, **dadurch gekennzeichnet, dass** die Drehdurchführung (25) eine Lagerbüchse (45) aufweist, welches auf den Innenumfang des Außenrohres (29) aufgeschraubt ist und einen Anschlag für das Tellerfederpaket (40) ausbildet.

13. Sonnenkraftwerk nach Anspruch 12, **dadurch gekennzeichnet, dass** die Lagerbüchse (45) zur Aufnahme von vorzugsweise zwei voneinander beabstandeten Gleitlager (42, 43) ausgebildet ist, die mit Fett aus einem als Fettkammer ausgebildeten Einstich (44) gespeist sind, wobei der Einstich (44) in einem radial nach außen gerichteten Flanschring (47) auf dem Auslaufrohr (28) angeordnet ist.

14. Sonnenkraftwerk nach Anspruch 13, **dadurch gekennzeichnet, dass** die Gleitlager (42, 43) eine radiale und axiale Drehlagerung zwischen dem Einlaufrohr (27) und dem Auslaufrohr (28) ausbilden, hohe Verkantungskräfte übertragen und eine hohe Lebensdauer aufweisen.

15. Sonnenkraftwerk nach einem der vorhergehenden Ansprüche 12 bis 14, **dadurch gekennzeichnet, dass** die Lagerbüchse (45) im hinteren Bereich einen Ansatz ausbildet, der in Richtung aus das Auslaufrohr (28) einen Spielbereich (48) ausbildet, wobei auf dem Ansatz Aufnahmeanschläge (49) zur drehbaren Lagerung der Lagerringe (21, 23) ausgebildet sind.

## Claims

1. Solar power plant with a rotary device, which has collectors, which are preferably configured with parabolic troughs guided uniaxially, the parabolic troughs having curved parabolic mirrors (1, 15), which concentrate the sunlight (5) onto one or more absorber pipes (6, 16), which run in the focal line, are connected to one another and convert the concentrated solar radiation (8) into heat and emit it to a circulating heat transfer medium, wherein, as the forcible rotary drive for a tube connection between adjacent absorber pipes, each absorber pipe (6, 16) is connected to a flexible metal tube (9, 19), **characterised in that** this metal tube is guided in a sealing manner by a rotary device (12), which is forcibly rotatably driven by a rotary drive of the parabolic mirror (1, 15).

2. Solar power plant according to claim 1, **characterised in that** a rotary feed-through (25), which forms a sealing rotary connection between two absorber pipes (6, 16) running in toward one another, is provided in the rotary device (12).

3. Solar power plant according to claim 2, **characterised in that** between an inlet pipe (27) and an outlet pipe (28) a bearing bush (45) coupled to the inlet pipe is present and **in that** a repeatedly stepped seal (37 to 39) with a spring preload (40) is arranged between the outlet pipe forming the inner pipe and the inlet pipe forming the outer pipe.

4. Solar power plant according to any one of claims 1 to 3, **characterised in that** the free end of the metal tube (9, 19) is introduced into the rotary device (12) and is connected in a liquid conducting manner to a rotary feed-through (25) which is rotatable *per se* or non-rotatable *per se.*

5. Solar power plant according to any one of claims 2 to 4, **characterised in that** the rotary device (12) has a stand (17), on which two spaced-apart bearing shells (20, 22) are arranged, which are kept spaced apart by means of spacer bolts (26), each bearing shell (20, 22) having a rotatable bearing ring (21, 22), and the rotary feed-through (25) being rotatable in the rotary device (12).

6. Solar power plant according to any one of claims 2 to 5, **characterised in that** the parabolic mirror (1, 15) is coupled to a driver (32, 33), which starts at a lug (34) non-rotatably connected to an inlet and/or outlet pipe (27, 28) of the rotary feed-through (25) and forcibly entrains the rotary device (12) upon a rotation of the parabolic mirror (1, 15).

7. Solar power plant according to any one of claims 1 to 6, **characterised in that** the inlet and outlet pipe (27, 28) are connected to one another in a sealing manner by means of a rotary coupling and have a nominal width in the range from 60 to 100 mm and the metal tube (9, 19) is welded to the respective inlet and outlet flange of the inlet and outlet pipe (27, 28).

8. Solar power plant according to any one of claims 2 to 6, **characterised in that** the inlet pipe (27) widens radially outwardly in the form of a housing pipe (29), which forms the outer region of the rotary feed-through (25), the outlet pipe (28) extending in a straight and cylindrical manner into the inner region of the housing pipe (29) and forming an inner pipe (46).

9. Solar power plant according to claim 8, **characterised in that** the rotary feed-through (25), between the outer housing pipe (29) and the inner pipe (46) of the outlet pipe (28), has a sealing package (36), which contains sealing rings (37, 38, 39) at least present in pairs, which preferably consist of a graphite material and have hardnesses that differ from one another in the pairing.

10. Solar power plant according to claim 9, **characterised in that** the seal is configured as a layered seal and **in that** a triple layering of two hard sealing rings with a soft sealing ring arranged in between is present.

11. Solar power plant according to either of the preceding claims 9 or 10, **characterised in that** an intermediate ring (39), which absorbs axial displacement forces of an adjoining plate spring package (40), adjoins the rear sealing ring (37).

12. Solar power plant according to claim 11, **characterised in that** the rotary feed-through (25) has a bearing bush (45), which is screwed onto the inner periphery of the outer pipe (29) and forms a stop for the plate spring package (40).

13. Solar power plant according to claim 12, **characterised in that** the bearing bush (45) is configured to receive preferably two sliding bearings (42, 43) spaced apart from one another, which are fed with grease from a recess (44) configured as a grease chamber, the recess (44) being arranged in a radially outwardly directed flange ring (47) on the outlet pipe (28).

14. Solar power plant according to claim 13, **characterised in that** the sliding bearings (42, 43) form a radial and axial rotary bearing arrangement between the inlet pipe (27) and the outlet pipe (28), transmit high tilting forces and have a long service life.

15. Solar power plant according to any one of the preceding claims 12 to 14, **characterised in that** the bearing bush (45) forms an attachment piece in the rear region, which forms a clearance region (48) in the direction of the outlet pipe (28), receiving stops (49) being formed on the attachment piece for the rotatable mounting of the bearing rings (21, 23).

## Revendications

1. Centrale solaire dotée d'un dispositif rotatif, qui comporte des collecteurs de préférence pourvus de concentrateurs cylindro-paraboliques à guidage uniaxe, ces concentrateurs comportant des miroirs paraboliques bombés (1, 15) qui concentrent la lumière solaire (5) sur un ou plusieurs tubes d'absorption (6, 16) qui s'étendent dans la ligne focale, qui sont reliés entre eux et qui transforment le rayonnement solaire concentré (8) en chaleur et le transmettent à un agent caloporteur en circulation, étant précisé que comme entraînement rotatif forcé pour un raccord entre des tubes d'absorption voisins, chaque tube d'absorption (6, 16) est relié à un tuyau métallique flexible (9, 19), **caractérisée en ce que** ce tuyau métallique traverse de manière étanche un dispositif rotatif (12), qui est soumis à un entraînement en rotation forcé par un entraînement rotatif du miroir parabolique (1, 15).

2. Centrale solaire selon la revendication 1, **caractérisée en ce qu'**il est prévu dans le dispositif de rotation (12) un passage rotatif (25) qui forme un raccord rotatif entre deux tubes d'absorption (6, 16) entrant l'un vers l'autre.

3. Centrale solaire selon la revendication 2, **caractérisée en ce qu'**il est prévu entre un tube d'entrée (27) et un tube de sortie (28) un coussinet (45) accouplé au tube d'entrée, et **en ce qu'**il est prévu entre le tube de sortie qui forme le tube intérieur et le tube d'entrée qui forme le tube extérieur un joint d'étanchéité à étagement multiple (37-39) à contrainte élastique (40).

4. Centrale solaire selon l'une des revendications 1 à 3 précédentes, **caractérisée en ce que** l'extrémité libre du tuyau métallique (9, 19) est introduite dans le dispositif rotatif (12) et est raccordée de manière étanche au liquide à un passage rotatif (25) conçu pour pouvoir tourner lui-même ou pas.

5. Centrale solaire selon l'une des revendications 2 à 4 précédentes, **caractérisée en ce que** le dispositif rotatif (12) comporte un support (17) sur lequel sont disposées deux douilles de palier (20,22) espacées qui sont maintenues espacées à l'aide de tiges d'écartement (26), chaque douille de palier (20, 22) comportant une bague de palier rotative (21, 23), et le passage rotatif (25) étant conçu pour pouvoir tourner dans le dispositif rotatif (12).

6. Centrale solaire selon l'une des revendications 2 à 5 précédentes, **caractérisée en ce que** le miroir parabolique (1, 15) est couplé à un organe d'entraînement (32, 33) qui est appliqué sur une saillie (34) reliée, fixe en rotation, à un tube d'entrée et/ou de sortie (27, 28) du passage rotatif (25) et qui entraîne de manière forcée le dispositif rotatif (12) lors d'une rotation du miroir parabolique (1, 15).

7. Centrale solaire selon l'une des revendications 1 à 6 précédentes, **caractérisée en ce que** les tubes d'entrée et de sortie (27, 28) sont reliés entre eux de manière étanche à l'aide d'un accouplement rotatif et présentent un diamètre nominal situé dans la plage de 60 à 100 mm, et le tuyau métallique (9, 19) est soudé aux brides d'entrée et de sortie des tubes d'entrée et de sortie (27, 28).

8. Centrale solaire selon l'une des revendications 2 à 6 précédentes, **caractérisée en ce que** le tube d'entrée (27) s'élargit radialement vers l'extérieur pour former un tube enveloppant (29) qui forme la zone extérieure du passage rotatif (25), le tube de sortie (28) s'étendant suivant une forme droite et cylindrique dans la zone intérieure du tube enveloppant (29) et formant un tube intérieur (46).

9. Centrale solaire selon la revendication 8, **caractérisée en ce que** le passage rotatif (25) comporte entre le tube enveloppant extérieur (29) et le tube intérieur (46) du tube de sortie (28) un paquet de joints d'étanchéité (36) qui contient des bagues d'étanchéité (37, 38, 39) prévues au moins par paires, composées d'un matériau en graphite et présentant des duretés différentes, dans la paire.

10. Centrale solaire selon la revendication 9, **caractérisée en ce que** le joint d'étanchéité est conçu comme un joint stratifié et **en ce qu'**il est prévu une stratification triple, avec deux bagues d'étanchéité dures et une bague d'étanchéité souple disposée entre les deux.

11. Centrale solaire selon l'une des revendications 9 à 10 précédentes, **caractérisée en ce qu'**il est prévu à la suite du joint d'étanchéité arrière (37) une bague intermédiaire (39) qui reçoit les forces de coulissement axiales d'un paquet de ressorts à disques (40) prévu à la suite.

12. Centrale solaire selon la revendication 11, **caractérisée en ce que** le passage rotatif (25) comporte un coussinet (45) qui est vissé sur la circonférence intérieure du tube extérieur (29) et qui forme une butée pour le paquet de ressorts à disques (40).

13. Centrale solaire selon la revendication 12, **caractérisée en ce que** le coussinet (45) est conçu pour recevoir de préférence deux paliers lisses (42, 43) espacés qui sont alimentés en graisse à partir d'une gorge (44) conçue comme une chambre à graisse, la gorge (44) étant disposée sur le tube de sortie (28) dans un anneau de bride (47) dirigé radialement vers l'intérieur.

14. Centrale solaire selon la revendication 13, **caractérisée en ce que** les paliers lisses (42, 43) forment un montage rotatif radial et axial entre le tube d'entrée (27) et le tube de sortie (28), transmettent des forces de basculement élevées et présentent une durée de vie élevée.

15. Centrale solaire selon l'une des revendications 12 à 14 précédentes, **caractérisée en ce que** le coussinet (45) forme dans la zone arrière un épaulement qui forme en direction du tube de sortie (28) une zone de jeu (48), étant précisé que des butées de réception (48) pour le montage en rotation des bagues de palier (21, 23) sont formées sur ledit épaulement.
